# EUROPEAN PATENT APPLICATION

(11) **EP 4 835 975 A1**
(43) Date of publication of application: **04.11.2026**
(21) Application number: 24912897.6
(22) Date of filing: 25.12.2024
(51) Int. Cl.: H01M 4/13, H01M 4/62, H01M 10/052, H01M 10/0587, H01M 50/531

(54) **NON-AQUEOUS ELECTROLYTE SECONDARY BATTERY**

(30) Priority: 27.12.2023 JP 2023221167
(71) Applicant: Panasonic Intellectual Property Management Co., Ltd., Kadoma-shi, Osaka 571-0057 (JP)
(72) Inventor: NAKATSUTSUMI, Takayuki, kadoma-shi, Osaka 571-0057 (JP)
(74) Representative: Eisenführ Speiser
(86) International application number: PCT/JP2024/045874
(87) International publication number: WO 2025/143011

(57) **Abstract**

A first electrode of a non-aqueous electrolyte secondary battery according to the present disclosure has a current collector and a mixture layer formed on the surface of the current collector. An exposed portion in which the current collector is exposed is formed on the surface of the first electrode. The exposed portion is in contact with only one end portion of both end portions in the lateral direction of the first electrode, and an electrode tab is connected to the exposed portion and led out from one end portion. The mixture layer contains an active material, granular carbon, and fibrous carbon. When the mixture layer is divided into a first mixture layer aligned with the exposed portion in the longitudinal direction of the first electrode and a second mixture layer adjacent to the exposed portion and the first mixture layer in the lateral direction of the first electrode, the first mixture layer contains granular carbon, and the second mixture layer contains fibrous carbon. The content of fibrous carbon in the first mixture layer is 0.1 mass % or less, and the content of the fibrous carbon in the second mixture layer is higher than the content of the fibrous carbon in the first mixture layer.

## Description

### TECHNICAL FIELD

The present disclosure relates to non-aqueous electrolyte secondary batteries, in particular, a non-aqueous electrolyte secondary battery provided with an electrode in which two mixture layers containing fibrous carbon at different content ratios are formed.

### BACKGROUND

In recent years, non-aqueous electrolyte secondary batteries that perform charging and discharging by moving lithium or other ions via non-aqueous electrolyte between two electrodes having different polarities are widely used as secondary batteries having a high output and a high energy density. Patent Literature 1 discloses a positive electrode having a surface on which two mixture layers next to each other are formed to extend along the longitudinal direction of a band-shaped positive electrode current collector. One of the mixture layers contains highly conductive fibrous carbon. Patent Literature 1 describes that an inner resistance of a battery can be reduced by configuring the positive electrode as described above. It can be assumed that the deterioration of battery capacity can be reduced even after repeating charging and discharging by including a positive electrode having a high conductive mixture layer.

### CITATION LIST

### PATENT LITERATURE

PATENT LITERATURE 1: International Publication No. 2019/193882

### SUMMARY

In general, in order to form a mixture layer on a surface of a current collector, a mixture slurry is applied from one end of the current collector toward the other end in the longitudinal direction of the current collector. A current collector exposed portion in which a current collector is exposed may be formed by intermittent coating, leaving a part of the current collector uncoated with the mixture slurry. As a result of the intensive studies conducted by the present inventors, it was found that a mixture slurry was sometimes applied beyond a predetermined coating range when temporarily stopping the application to form the current collector exposed portion, and that this tendency was significant when using a mixture slurry that contained fibrous carbon. Because an electrode tab was connected to the current collector exposed portion, if a mixture layer was formed beyond a predetermined range, the current collection capability might be lowered due to the mixture layer intervening between the electrode tab and the current collector. As the technique disclosed by Patent Literature 1 fails to consider the coating failure of the mixture slurry, there is still room for improvement.

An object of the present disclosure is to provide a non-aqueous electrolyte secondary battery having excellent current collectability and charge/discharge cycle characteristics.

A non-aqueous electrolyte secondary battery according to one aspect of the present disclosure includes an electrode assembly including a first electrode and a second electrode, which have a band shape and different polarities from each other, and a non-aqueous electrolyte. The first electrode includes a current collector and a mixture layer formed on a surface of the current collector. An exposed portion in which the current collector is exposed is formed on a surface of the first electrode. The exposed portion contacts only one of both ends in the lateral direction of the first electrode. An electrode tab is connected to the exposed portion and led out from the one end. The mixture layer includes an active material, granular carbon, and fibrous carbon. The mixture layer is divided into a first mixture layer and a second mixture layer. The first mixture layer is disposed alongside the exposed portion in the longitudinal direction of the first electrode. The second mixture layer is disposed next to the exposed portion and the first mixture layer in the lateral direction of the first electrode. The first mixture layer includes the granular carbon. The second mixture layer includes the fibrous carbon. A content rate of the fibrous carbon in the first mixture layer is less than or equal to 0.1% by mass. A content rate of the fibrous carbon in the second mixture layer is higher than the content rate of the fibrous carbon in the first mixture layer.

The non-aqueous electrolyte secondary battery according to the present disclosure can improve charge/discharge cycle characteristics while maintaining the current collectability.

### BRIEF DESCRIPTION OF DRAWINGS

[FIG. 1] is a vertical cross-sectional view of a cylindrical secondary battery according to one exemplary embodiment of the present disclosure.
[FIG. 2] is a front view of a positive electrode and a negative electrode of an electrode assembly in a developed state according to one exemplary embodiment of the present disclosure.

### DESCRIPTION OF EMBODIMENTS

One exemplary embodiment of a non-aqueous electrolyte secondary battery according to the present disclosure is described in detail below. Although a cylindrical battery in which a wound-type electrode assembly is enclosed in a cylindrical housing body is described as an example below, the electrode assembly is not limited to a wound type. The electrode assembly may be a stacked type in which multiple positive electrodes and multiple negative electrodes are stacked alternately one after another via separators. Further, the housing body is not limited to a cylindrical type. The housing body may be, for example, a prismatic shape, a coin shape, or a battery case made of laminated sheets including a metal layer and a resin layer.

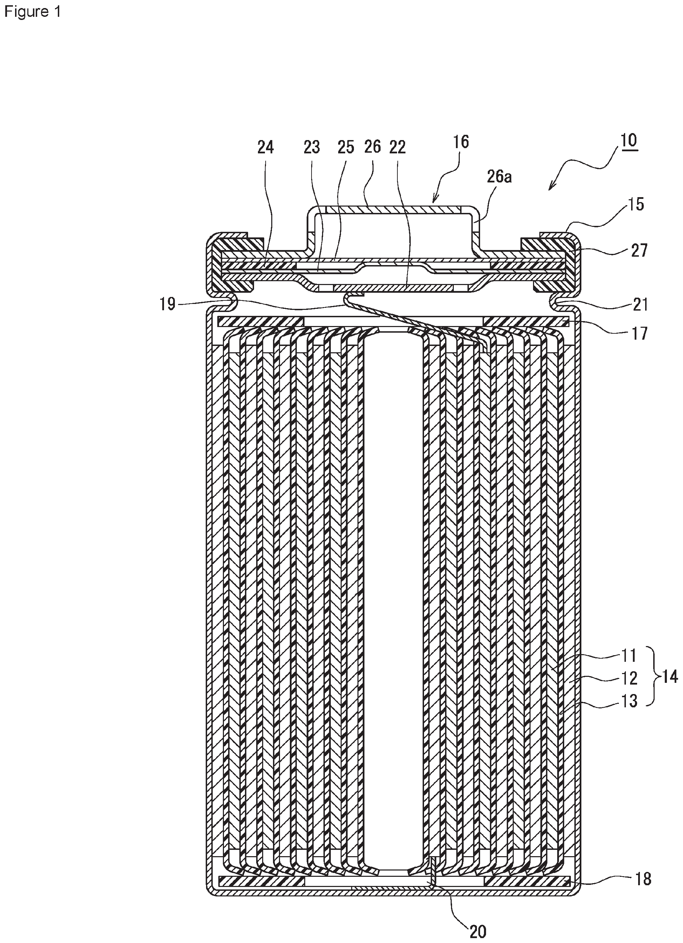

FIG. 1 is a cross-sectional view in the axial direction of a cylindrical secondary battery 10 according to one exemplary embodiment. In the secondary battery 10 shown in FIG. 1, an electrode assembly 14 and non-aqueous electrolyte solution (not shown) are housed in a housing body 15. The interior of the secondary battery 10 is sealed by closing an opening of the housing body 15 with a sealing assembly 16. It should be noted that, in the description below, the sealing assembly 16 side is regarded as "up", whereas the bottom side of the housing body 15 is regarded as "down" for convenience of description.

The non-aqueous electrolyte is ion-conductive (for example, lithium ion conductive). The non-aqueous electrolyte may be liquid electrolyte (electrolyte solution) or solid electrolyte. The liquid electrolyte (electrolyte solution) contains non-aqueous solvent and electrolyte salt dissolved in the non-aqueous solvent. As the non-aqueous solvent, for example, the following may be used: esters, ethers, nitriles, amides, and a mixture of two or more types of these solvents. As an example of the non-aqueous solvents, ethylene carbonate (EC), ethyl methyl carbonate (EMC), dimethyl carbonate (DMC), diethyl carbonate (DEC), and a mixture of these solvents can be listed. The non-aqueous solvent may contain halogen-substituted product (for example, fluorinated ethylene carbonates) in which the hydrogen atoms in these solvents are at least partially substituted with halogen atoms such as fluorine. As the electrolyte salt, lithium salt, such as LiPF₆, is used.

As the solid electrolyte, for example, a solid or gel polymer electrolyte, or an inorganic solid electrolyte is used. The polymer electrolyte contains, for example, a lithium salt and a matrix polymer, or a non-aqueous solvent, a lithium salt, and a matrix polymer. As the matrix polymer, for example, a polymer material which gels upon absorbing a non-aqueous solvent is used. As the polymer material, for example, a fluororesin, an acrylic resin, or a polyether resin is used. As the inorganic solid electrolyte, for example, a material known for all-solid state lithium-ion secondary batteries (for example, oxidebased solid electrolytes, sulfide-based solid electrolytes, and halide-based solid electrolytes) is used.

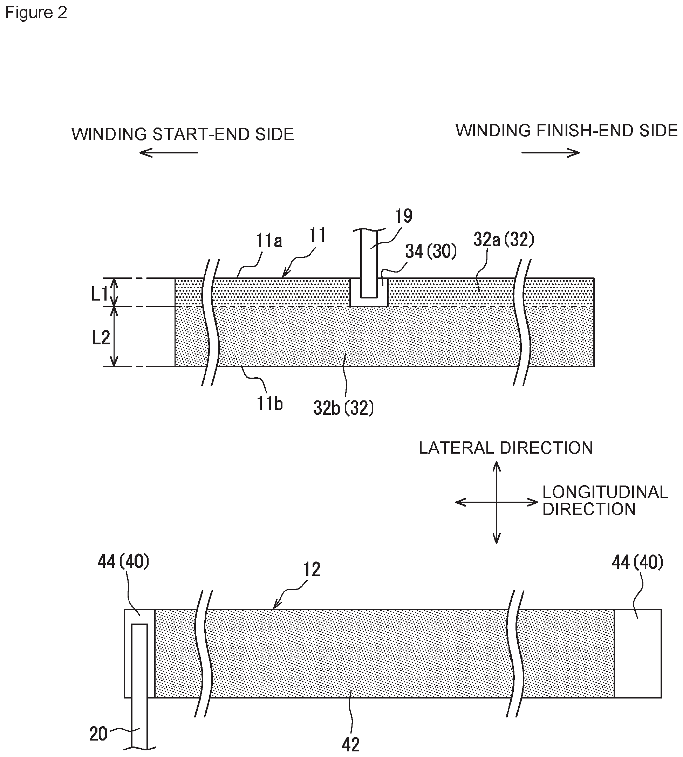

The electrode assembly 14 has a wound structure in which a positive electrode 11 and a negative electrode 12, both of which have a band shape, are wound via a separator 13. Insulating plates 17, 18 are respectively provided above and under the electrode assembly 14. A positive electrode tab 19 extends upward through a through-hole in the insulating plate 17 and is welded to a lower surface of a filter 22 that is a bottom plate of the sealing assembly 16. In the secondary battery 10, a cap 26 which is a top plate of the sealing assembly 16 is electrically connected to the filter 22 and serves as a positive electrode terminal. On the other side, a negative electrode tab 20 extends through a through-hole in the insulating plate 18 to the bottom of the housing body 15, and is welded on an inner surface at the bottom of the housing body 15. The negative electrode 12 is located at the outermost surface of the electrode assembly 14 so that an exposed portion in which a surface of a negative electrode current collector (refer to FIG. 2 described below) of the negative electrode 12 is exposed and an internal surface of the housing body 15 are in contact with each other. In the secondary battery 10, the housing body 15 serves as a negative electrode terminal.

The housing body 15 is, for example, a bottomed cylindrical housing body made of a metal. A gasket 27 is disposed between the housing body 15 and the sealing assembly 16 to maintain sealability inside the secondary battery 10. The housing body 15 includes a grooved portion 21 which is formed, for example, by pressing a side surface portion from outside to support the sealing assembly 16. It is preferable that the grooved portion 21 is annually formed along the circumferential direction of the housing body 15 to support the sealing assembly 16 with an upper surface of the grooved portion 21.

The sealing assembly 16 includes the filter 22, a lower vent member 23, an insulating member 24, an upper vent member 25, and the cap 26, which are stacked in this order starting from the electrode assembly 14 side. Each of these elements of the sealing assembly 16 has a disc or ring shape. All elements excluding the insulating member 24 are electrically connected to each other. The lower vent member 23 and the upper vent member 25 are connected to each other at the center, with the insulating member 24 disposed therebetween at their circumferential edge portions. When the internal pressure of the battery rises due to an abnormal heat generation, for example, the lower vent member 23 ruptures and thereby the upper vent member 25 inflates toward the cap 26 side such that the upper vent member 25 is detached from the lower vent member 23, breaking the electrical connection between the two. If the inner pressure further rises, the upper vent member 25 ruptures to release the gas from an opening 26a of the cap 26.

With reference to FIG. 2, the positive electrode 11, the negative electrode 12, and the separator 13, all of which form the electrode assembly 14, are described in detail below, particularly, the positive electrode 11. FIG. 2 is a plan view showing the positive electrode 11 and the negative electrode 12 according to one exemplary embodiment in their developed state, with the separator 13 being omitted. In FIG. 2, the lateral direction of the positive electrode 11 and the negative electrode 12 is the axial direction of the electrode assembly 14, whereas the longitudinal direction of the positive electrode 11 and the negative electrode 12 is the winding direction of the electrode assembly 14. The description below shows an example, in which the positive electrode 11 is the first electrode and the negative electrode 12 is the second electrode. The present disclosure is not limited to this example. For example, the negative electrode 12 may be the first electrode. Further, the second electrode may have properties similar to those of the first electrode, and the positive electrode 11 and the negative electrode 12 may both have the properties of the first electrode.

### [Positive Electrode]

The positive electrode 11 includes a positive electrode current collector 30 and a positive electrode mixture layer 32 formed on one or both surfaces of the positive electrode current collector 30. As described further below, the positive electrode mixture layer 32 can be divided into a first positive electrode mixture layer 32a and a second positive electrode mixture layer 32b. It is preferable that the positive electrode mixture layers 32 are formed on both surfaces of the positive electrode current collector 30. A positive electrode current collector exposed portion 34 in which the positive electrode current collector 30 is exposed without being covered with the positive electrode mixture layer 32 is formed on a surface of the positive electrode 11.

The positive electrode current collector 30 has a band-shaped outline that substantially coincides with the outline of the positive electrode 11. As the positive electrode current collector 30, a metal foil stable within the potential range of the positive electrode, such as aluminum, or a film with said metal formed at the top surface layer may be used. The thickness of the positive electrode current collector 30 is, for example, 10 µm to 30 µm.

The positive electrode current collector exposed portion 34 is provided at only one end portion 11a of the two end portions 11a, 11b in the lateral direction of the positive electrode 11. The positive electrode current collector exposed portion 34 has, for example, a rectangular shape terminated in the lateral direction of the positive electrode 11. It is preferable that the positive electrode current collector exposed portions 34 are disposed on both surfaces of the positive electrode 11 so as to overlap with each other in the thickness direction of the positive electrode 11.

The positive electrode tab 19 is attached to the positive electrode current collector exposed portion 34 and led out from one end portion 11a. The positive electrode tab 19 is connected to the positive electrode current collector exposed portion 34 using, for example, ultrasonic welding. In the example shown in FIG. 2, the positive electrode current collector exposed portion 34 is disposed at a substantial center in the longitudinal direction of the positive electrode 11. It should be noted that multiple positive electrode current collector exposed portions 34 may be disposed in the longitudinal direction of the positive electrode 11.

The positive electrode mixture layer 32 includes, for example, a positive electrode active material, a conductive agent, and a binder. The positive electrode mixture layer 32 includes a conductive agent of 0.1% by mass to 3% by mass and a binder of 0.1% by mass to 5% by mass relative to the content of the positive electrode active material. The conductive agent includes granular carbon and fibrous carbon.

As the positive electrode active material contained in the positive electrode mixture layer 32, a lithium-containing transition metal oxide that includes a transition metal oxide, such as Co, Mn, and Ni, can be used. Although the lithium-containing transition metal oxide is not limited to a particular type, it is preferable to use a complex oxide that is expressed by a general formula Li₁₊ₓMO₂ (where -0.2 < x ≤ 0.2; and M includes at least one of Ni, Co, Mn, and Al).

As the binder contained in the positive electrode mixture layer 32, for example, fluorine-based resins, such as polytetrafluoroethylene (PTFE) and polyvinylidene fluoride (PVDF), polyacrylonitrile (PAN), polyimide resins, acrylic resins, and polyolefin resins can be listed. These may be used alone or two or more types may be used in combination.

The positive electrode mixture layer 32 can be divided into the first positive electrode mixture layer 32a, which is disposed alongside the positive electrode current collector exposed portion 34 in the longitudinal direction of the positive electrode 11, and the second positive electrode mixture layer 32b, which is located next to the positive electrode current collector exposed portion 34 and the first positive electrode mixture layer 32a in the lateral direction of the positive electrode 11.

The first positive electrode mixture layer 32a includes granular carbon, whereas the second positive electrode mixture layer 32b includes fibrous carbon. The content rate of the fibrous carbon in the first positive electrode mixture layer 32a is less than or equal to 0.1% by mass. The content rate of the fibrous carbon in the second positive electrode mixture layer 32b is higher than the content rate of the fibrous carbon in the first positive electrode mixture layer 32a. Because this can prevent the first positive electrode mixture layer 32a from expanding into the positive electrode current collector exposed portion 34, while allowing the positive electrode mixture layer 32 to contain the fibrous carbon, the current collectability and charge/discharge cycle characteristics can be improved. The first positive electrode mixture layer 32a and the second positive electrode mixture layer 32b may both include granular carbon and fibrous carbon. The total content rate of the granular carbon and the fibrous carbon in the second positive electrode mixture layer 32a may be lower than the total content rate of the granular carbon and the fibrous carbon in the first positive electrode mixture layer 32a.

As the fibrous carbon, carbon nanotubes (CNTs), carbon nanofibers (CNFs), vaporgrown carbon fibers (VGCFs), electrospun carbon fibers, polyacrylonitrile (PAN) carbon fibers, pitch-based carbon fibers can be listed as examples. These may be used alone or two or more types may be used in combination. It is preferable that as the fibrous carbon, CNTs are used. As the CNTs, single-walled carbon nanotubes (SWCNTs) and multi-walled carbon nanotubes (MWCNTs) can be listed, and MWCNTs are more preferable. SWCNTs have a carbon nano-structure in which a single layer graphene sheet forms a cylindrical shape, while the multi-walled carbon nanotube has a carbon nano-structure in which two or more graphene sheets are concentrically nested within one another to form one cylindrical shape.

As the granular carbon, carbon materials, such as carbon black (CB) graphite, which is for example, acetylene black (AB) and Ketjenblack can be listed. These may be used alone or two or more types may be used in combination. It is preferable that as the granular carbon, CB, more preferably AB, is used.

The thicknesses of the first positive electrode mixture layer 32a and the second positive electrode mixture layer 32b are, for example, 10 µm to 150 µm respectively on one side of the positive electrode current collector 30. Although the thickness of the first positive electrode mixture layer 32a and the thickness of the second positive electrode mixture layer 32b are equal to each other in the present embodiment, the thicknesses may differ from each other.

In the lateral direction of the positive electrode, the length Li of the first positive electrode mixture layer 32a and the length L2 of the second positive electrode mixture layer 32b may satisfy 1/6 ≤ L1/(L1+L2) < 1/2. As this can allow the second positive electrode mixture layer 32b containing fibrous carbon to be large while allocating the positive electrode current collector exposed portion 34 large enough for a stable connection of the positive electrode tab 19, the current collectability and charge/discharge cycle characteristics can be more significantly improved.

Although a preparation method of the positive electrode 11 is not limited to a specific method, the positive electrode 11 may be prepared, for example, as described below.
(1) A first positive electrode mixture slurry for the first positive electrode mixture layer 32a and a second positive electrode mixture slurry for the second positive electrode mixture layer 32b are respectively prepared. Each of the first positive electrode mixture slurry and the second positive electrode mixture slurry contains, for example, a positive electrode active material, a conductive agent, and a binder.
(2) The first positive electrode mixture slurry and the second positive electrode mixture slurry are applied to the positive electrode current collector 30 along the longitudinal direction in stripes so as to be located next to each other in the lateral direction. On this occasion, the positive electrode current collector exposed portion 34 is prepared, for example, by applying no first positive electrode mixture slurry to a part of the positive electrode current collector 30 by intermittent coating.
(3) The positive electrode 11 is prepared by drying the applied slurry and then compressing the applied film using a compression roller.

### [Negative Electrode]

The negative electrode 12 includes, for example, a negative electrode current collector 40 and a negative electrode mixture layer 42 formed on one or both surfaces of the negative electrode current collector 40. The negative electrode current collector 40 has a band-shaped outline that substantially coincides with the outline of the negative electrode 12. As the negative electrode current collector 40, a metal foil stable within the potential range of the negative electrode, such as copper, or a film with said metal formed at the top surface layer may be used. The thickness of the negative electrode current collector is, for example, 5 µm to 30 µm.

It is preferable that the negative electrode mixture layers 42 are disposed on both surfaces of the negative electrode current collector 40. The thickness of the negative electrode mixture layer 42 is, for example, 10 µm to 150 µm respectively on one side of the negative electrode current collector 40. The negative electrode mixture layer 42 includes, for example, a negative electrode active material and a binder. The content of the negative electrode active material in the negative electrode mixture layer 42 is, for example, 80% by mass to 99% by mass relative to the total mass of the negative electrode mixture layer 42. The negative electrode 12 may be prepared, for example, by applying the negative electrode mixture slurry containing the negative electrode active material and the binder to both surfaces of the negative electrode current collector 40, drying the applied film, and then compressing the applied film using a roller or the like.

The negative electrode active material contained in the negative electrode mixture layer 42 is not limited to a specific type as long as the material can reversibly store and release lithium ions. In general, a carbon material, such as graphite, is used. The graphite may be natural graphite, such as flake graphite, lump graphite, and earthy graphite; or artificial graphite, such as lump artificial graphite and graphitized mesophase carbon microbeads. As the negative electrode active material, a metal that alloys with lithium, such as Si and Sn, a metal compound containing Si, Sn, and the like, and a lithium titanium composite oxide may be used. The following materials may be used in combination with graphite: for example, silicon oxides represented by SiOₓ (where x is 0.5 to 1.6), silicon-containing materials in which fine particles of Si are dispersed in a lithium silicate phase represented by Li_{2y}SiO_{(2+y)} (0 < y < 2), and silicon-containing materials in which fine particles of Si are dispersed in a carbon phase.

As the binder contained in the negative electrode mixture layer 42, for example, styrene-butadiene rubber (SBR), nitrile-butadiene rubber (NBR), carboxymethylcellulose (CMC) or its salts (CMC-Na, CMC-K, CMC-NH₄, etc., or partially neutralized salts), and polyacrylic acid (PAA) or its salts (PAA-Na, PAA-K, etc., or partially neutralized salts), and polyvinyl alcohol (PVA) can be listed. These may be used alone or two or more types may be used in combination.

In the example shown in FIG. 2, negative electrode current collector exposed portions 44 in which the negative electrode current collector 40 is exposed are formed on a surface of the negative electrode 12 near the winding start end and the winding finish end. The negative electrode current collector exposed portion 44 is a portion of the surface of the negative electrode current collector 40 not covered with the negative electrode mixture layer 42, and formed, for example, by applying no negative electrode mixture slurry on a part of the negative electrode current collector 40 by intermittent coating. The negative electrode tab 20 is connected to the negative electrode current collector exposed portion 44 near the winding start end. The negative electrode current collector exposed portion 44 near the winding finish end directly contacts the housing body 15. It is preferable that the negative electrode current collector exposed portions 44 are formed on both surfaces of the negative electrode 12 so as to overlap with each other in the thickness direction of the negative electrode 12. The negative electrode tab 20 is connected to the negative electrode current collector exposed portion 44, for example, by ultrasonic welding.

### [Separator]

As the separator 13, a porous sheet having ion permeability and insulating property is used. As examples of the porous sheet, a microporous thin film, a woven fabric, and a non-woven fabric can be listed. As the material of the separator 13, polyolefin, such as polyethylene and polypropylene, cellulose, and the like are preferable. The separator 13 may have a single-layer structure or a multi-layer structure. A resin layer having a high heat-resistance, such as an aramid resin, may be formed on a surface of the separator 13.

A filler layer including an inorganic material filler may be formed on at least one of the interfaces between the separator 13 and the positive electrode 11 and between the separator 13 and the negative electrode 12. As the inorganic filler, for example, oxides and phosphate compounds containing a metal element such as Ti, Al, Si, and Mg can be listed. The filler layer may be formed by applying slurry containing said filler on a surface of the positive electrode 11, the negative electrode 12, or the separator 13.

### EXAMPLES

Although the present disclosure is described in more detail below using examples, the present disclosure should not be limited to these examples.

### <Examples>

### [Positive Electrode Preparation]

As a positive electrode active material, aluminum-containing lithium nickel cobalt oxide expressed by the compositional formula LiNi_{0.91}Co_{0.04}Al_{0.05}O₂ was used. The positive electrode active material, acetylene black (AB), and polyvinylidene fluoride (PVDF) were mixed at the mass ratio of 100:0.8:1, and stirred while adding N-methylpyrrolidone (NMP) to prepare a first positive electrode mixture slurry. The positive electrode active material, multi-layer carbon nanotubes (CNTs), and polyvinylidene fluoride (PVDF) were mixed at the mass ratio of 100:0.5:1, and stirred while adding N-methylpyrrolidone (NMP) to prepare a second positive electrode mixture slurry.

The first positive electrode mixture slurry and the second positive electrode mixture slurry were applied to a band-shaped positive electrode current collector made of an aluminum foil along the longitudinal direction in a stripe shape, and dried. The applying and drying processes were performed also on the rear surface in the same manner. After the applied and dried film was compressed using a roller, the positive electrode current collector was cut into a predetermined electrode plate size to prepare a positive electrode, on both surfaces of which positive electrode mixture layers were formed. The positive electrode mixture layer had the same configuration as the one shown in FIG. 2. The first positive electrode mixture slurry was applied to a region corresponding to the first positive electrode mixture layer, whereas the second positive electrode mixture slurry was applied to a region corresponding to the second positive electrode mixture layer. A positive electrode current collector exposed portion was formed at a substantial center in the longitudinal direction of the positive electrode by intermittent coating with the first positive electrode mixture slurry, and an aluminum positive electrode tab was welded thereon.

The first positive electrode mixture slurry exhibited good applicability, and no occurrence was observed in which the first positive electrode mixture layer expanded into the positive electrode current collector exposed portion of the positive electrode mixture layer. The relationship between a length L1 of the first positive electrode mixture layer and a length L2 of the second positive electrode mixture layer satisfied a relationship expressed as L1/(L1+L2) = 1/3 in the lateral direction of the positive electrode.

### [Negative Electrode Preparation]

Negative electrode mixture slurry was prepared by mixing 98 parts by mass of graphite, 1 part by mass of sodium salt of carboxymethylcellulose (CMC-Na), and 1 part by mass of styrene-butadiene rubber (SBR), and adding an appropriate amount of water. This negative electrode mixture slurry was then applied to both surfaces of a band-shaped negative electrode current collector made of a copper foil having a thickness of 8 µm such that a negative electrode current collector exposed portion in which the negative electrode current collector was exposed was formed at an end on the winding finish side. After this applied film was dried, the negative electrode current collector was compressed and cut into a predetermined electrode plate size to prepare a negative electrode, on both surfaces of which negative electrode mixture layers were formed, and a negative electrode tab made of nickel was welded on the negative electrode current collector exposed portion.

### [Electrolyte Solution Preparation]

An electrolyte solution was prepared by dissolving lithium hexafluorophosphate (LiPF₆) in a mixed solvent containing ethylene carbonate (EC) and ethyl methyl carbonate (EMC) (EC:EMC = 1:3 by volume) such that the concentration of LiPF₆ was 1.0 mol/L.

### [Secondary Battery Preparation]

An electrode assembly was prepared by winding the above positive electrode and the negative electrode via a microporous separator (a composite film of polyethylene and polypropylene) having a thickness of 20 µ. Insulating plates were respectively disposed above and under the electrode assembly, and the electrode assembly was housed into a cylindrical housing body. The housing body had external dimensions of 18 mm in diameter and 65 mm in height. The negative electrode tab was then welded to the bottom of the housing body, whereas the positive electrode tab was welded to a sealing assembly. Then, the secondary battery was prepared by injecting an electrolyte solution of 5.2 mL into the housing body by a reduced pressure method, and thereafter sealing the opening end of the housing body by crimping the housing body to the sealing assembly via a gasket.

### [Evaluation of Capacity Retention Rate]

Under an ambient temperature of 25°C, the above secondary battery was charged at a constant current at 0.3 C up to 4.2 V, and then charged at a constant-voltage of 4.2 V to 0.02C. Thereafter, the battery was discharged at a constant current at 0.5C down to 2.5 V. Counting this charge and discharge as one cycle, 100 cycles were performed and the capacity retention rate was obtained by the following formula: 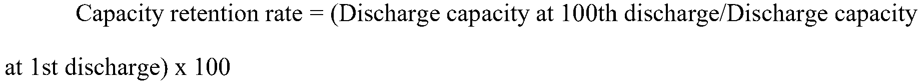 Capacity retention rate = (Discharge capacity at 100th discharge/Discharge capacity at 1st discharge) x 100

### <Comparative Example>

A secondary battery was prepared in the same manner as the above example other than that the first positive electrode mixture slurry was used instead of the second positive electrode mixture slurry such that the first positive electrode mixture slurry was applied to the entire surface of the positive electrode current collector except for the positive electrode current collector exposed portion, and evaluated.

Table 1 shows the evaluation results of the secondary batteries of the example and the comparative example. Table 1 also shows the conductive agents contained respectively in the first positive electrode mixture layer and the second positive electrode mixture layer.

**[Table 1]**

| | Conductive Agent | | | | | | | | Capacity Retention Rate [%] |
|---|---|---|---|---|---|---|---|---|---|
| | First Positive Electrode Mixture Layer | | | | Second Positive Electrode Mixture Layer | | | | |
| Example | | CNT | 0% | | | CNT | 0.5% | | 98 |
| | | AB | 0.8% | | | AB | 0% | | |
| Comparative Example | | CNT | 0% | | | CNT | 0% | | 92 |
| | | AB | 0.8% | | | AB | 0.8% | | |

In the secondary battery according to the example, as described above, no occurrence was observed in which the first positive electrode mixture layer expanded into the positive electrode current collector exposed portion of the positive electrode mixture layer, and the capacity retention rate was higher than that of the comparative example, as shown in Table 1. As such, it is understandable that a non-aqueous electrolyte secondary battery excellent in collectivity and charge-discharge cycle characteristics can be obtained by setting, in an electrode, the content rate of fibrous carbon in the second mixture layer higher than that in the first mixture layer, while setting the content rate of the fibrous carbon in the first mixture layer to 0.1% by mass or less.

The present disclosure is described in more detail with the following examples.

### Configuration 1:

A non-aqueous electrolyte secondary battery, comprising:
an electrode assembly including a first electrode and a second electrode, which have a band shape and different polarities from each other; and
a non-aqueous electrolyte,
wherein the first electrode includes a current collector and a mixture layer formed on a surface of the current collector, and an exposed portion in which the current collector is exposed is formed on a surface of the first electrode,
the exposed portion contacts only one of both ends in the lateral direction of the first electrode, and an electrode tab is connected to the exposed portion and led out from the one end,
the mixture layer includes an active material, granular carbon, and fibrous carbon,
the mixture layer is divided into a first mixture layer and a second mixture layer, the first mixture layer disposed alongside the exposed portion in the longitudinal direction of the first electrode, and the second mixture layer disposed next to the exposed portion and the first mixture layer in the lateral direction of the first electrode,
the first mixture layer includes the granular carbon,
the second mixture layer includes the fibrous carbon,
a content rate of the fibrous carbon in the first mixture layer is less than or equal to 0.1% by mass, and
a content rate of the fibrous carbon in the second mixture layer is higher than the content rate of the fibrous carbon in the first mixture layer.

### Configuration 2:

The non-aqueous electrolyte secondary battery according to Configuration 1,
wherein
a total content rate of the granular carbon and the fibrous carbon in the mixture layer is lower than a total content rate of the granular carbon and the fibrous carbon in the first mixture layer.

### Configuration 3:

The non-aqueous electrolyte secondary battery according to Configuration 1 or 2,
wherein
in the lateral direction of the first electrode, a length L1 of the first mixture layer and a length L2 of the second mixture layer satisfies: 1/6 ≤ L1/(L1+L2) < 1/2.

### Configuration 4:

The non-aqueous electrolyte secondary battery according to any one of Configurations 1 to 3, wherein
the fibrous carbon is carbon nanotubes, whereas the granular carbon is carbon black.

### Configuration 5:

The non-aqueous electrolyte secondary battery according to any one of Configurations 1 to 4, wherein
the first electrode is a positive electrode, whereas the second electrode is a negative electrode.

### REFERENCE SIGNS LIST

10 secondary battery, 11 positive electrode, 12 negative electrode, 13 separator, 14 electrode assembly, 15 housing body, 16 sealing assembly, 17, 18 insulating plate, 19 positive electrode tab, 20 negative electrode tab, 21 grooved portion, 22 filter, 23 lower vent member, 24 insulating member, 25 upper vent member, 26 cap, 26a opening, 27 gasket, 30 positive electrode current collector, 32 positive electrode mixture layer, 32a first positive electrode mixture layer, 32b second positive electrode mixture layer, 34 positive electrode current collector exposed portion, 40 negative electrode current collector, 42 negative electrode mixture layer, and 44 negative electrode current collector exposed portion.

## Claims

1. A non-aqueous electrolyte secondary battery, comprising:
an electrode assembly including a first electrode and a second electrode, which have a band shape and different polarities from each other; and
a non-aqueous electrolyte,
wherein the first electrode includes a current collector and a mixture layer formed on a surface of the current collector, and an exposed portion in which the current collector is exposed is formed on a surface of the first electrode,
the exposed portion contacts only one of both ends in the lateral direction of the first electrode, and an electrode tab is connected to the exposed portion and led out from the one end,
the mixture layer includes an active material, granular carbon, and fibrous carbon,
the mixture layer is divided into a first mixture layer and a second mixture layer, the first mixture layer disposed alongside the exposed portion in the longitudinal direction of the first electrode, and the second mixture layer disposed next to the exposed portion and the first mixture layer in the lateral direction of the first electrode,
the first mixture layer includes the granular carbon,
the second mixture layer includes the fibrous carbon,
a content rate of the fibrous carbon in the first mixture layer is less than or equal to 0.1% by mass, and
a content rate of the fibrous carbon in the second mixture layer is higher than the content rate of the fibrous carbon in the first mixture layer.

2. The non-aqueous electrolyte secondary battery according to claim 1, wherein
a total content rate of the granular carbon and the fibrous carbon in the second mixture layer is lower than a total content rate of the granular carbon and the fibrous carbon in the first mixture layer.

3. The non-aqueous electrolyte secondary battery according to claim 1, wherein
in the lateral direction of the first electrode, a length L1 of the first mixture layer and a length L2 of the second mixture layer satisfies: 1/6 ≤ L1/(L1+L2) < 1/2.

4. The non-aqueous electrolyte secondary battery according to claim 1, wherein
the fibrous carbon is carbon nanotubes, whereas the granular carbon is carbon black.

5. The non-aqueous electrolyte secondary battery according to claim 1, wherein
the first electrode is a positive electrode, whereas the second electrode is a negative electrode.
